# EUROPEAN PATENT SPECIFICATION

(11) **EP 0 572 671 B1**
(45) Date of publication and mention of the grant of the patent: **04.12.1996**
(21) Application number: 92920900.5
(22) Date of filing: 30.09.1992
(51) Int. Cl.: A01G 1/04

(54) **PROCESS FOR PRODUCING ARTIFICIAL BED LOG FOR SHIITAKE**
VERFAHREN ZUM HERSTELLEN EINES KÜNSTLICHES STAMMES FÜR DIE ZUCHT VON SHIITAKE
PROCEDE DE PRODUCTION D'UN TRONC ARTIFICIEL POUR LA CULTURE DES SHIITAKE

(30) Priority: 30.09.1991 JP 280812/91
(43) Date of publication of application: 08.12.1993
(73) Proprietor: KANEBO, LTD., Tokyo 131 (JP)
(72) Inventor: YAMAUCHI, Masaaki, Ashiya-shi, Hyogo 659 (JP); MURATA, Hideo, Habikino-shi, Osaka 583 (JP); SASAKI, Yoshifumi, Kawanishi-shi, Hyogo 666-01 (JP)
(74) Representative: Wakerley, Helen Rachael
(86) International application number: JP9201249
(87) International publication number: WO9306708

(56) References cited:
- GB-A- 2 181 122
- JP-A- 2 084 113
- JP-A-53 062 652
- JP-B- 2 046 167

## Description

The present invention relates to a process of preparing artificial bed blocks for "Shiitake" mushroom cultivation whereby "Shiitake" mushrooms superior in quality can be produced in high yields.

Generally, "Shiitake" mushroom is cultivated by using bed logs, inoculating spawn thereto, covering the bed logs with sheets to prevent bed logs from drying, promoting growth of the mycelia under the conditions conducive to growing and to prepare bed logs, then laying out the bed logs at an appropriate place to permit continued growth of the mycelia and the growth of "Shiitake" fruit bodies. According to the conventional method mentioned above, bed logs are used. However, a decrease in number of the broad-leaf trees has reduced the availability of bed logs. Moreover, since a long cultivation period is required for this method, a shorter period for cultivation is desired.

For this reason it has been tried to prepare artificial bed blocks from sawdust and the like and to cultivate "Shiitake" mushrooms on such artificial bed blocks. As such a method, a cultivating method with artificial bed blocks has been employed so far, which comprises filling a container with sawdust and the like as culture medium, inoculating spawn thereto for incubation to form lumps of mycelia, taking out said lumps from the container to leave as it is or to be given cooling stimulation such as immersion into cold water for appearance of "Shiitake" fruit bodies.

In the cultivation method in a container mentioned above, even after culture medium has been overspread with the grownup mycelia, the lumps of mycelia are kept for a long term in a container for overripening to prevent contamination by various weed fungi until the surface becomes rough by upheaval of mycelia or until browning or fruit body primordia can be identified.

However, since carbon dioxide increases and oxygen decreases due to the respiration of mycelia as they grow in a container, the mycelia become inactive gradually in an overcultured state after culture medium has been overspread with mycelia, and then lignin decomposition is delayed. Therefore, yield and quality of "Shiitake" mushrooms obtained deteriorate.

And also, the inventors of the present invention proposed a method (the Japanese Patent Publication No. 2-46167) of preparing artificial bed blocks which comprises incubating lumps of mycelia in a container (first cultivation process), culturing lumps of mycelia taken out from the container under a saturated or nearly saturated humidity in a closed space (second cultivation process) to form a new hyphae layer on the surface and cover the inner part, and then watering thereon for cultivation (third cultivation process) to harden the above new hyphae layer and then to be lignified. Such a method is also described in GB 2 181 122. However, how to control in the first cultivation process of culturing in a container is unknown, which has been dependent upon the experiences of skilled persons wherein there was a problem of the unstableness in quality of the artificial culturing bed blocks.

Furthermore, since the component of the culture medium hardly exist in the uneven parts formed on the surface of the lumps of mycelia in a container, it is difficult to supply nutritions made of decomposed culture medium thereto after the lumps are taken out from the container, and then *Lentinus edodes* often weakens and corrupts due to the change of the ambient environments (under overdried or overmoistured condition) or adherence of the weed fungi.

Accordingly, the object of the present invention is to provide a method of manufacturing artificial culturing bed blocks wherein "Shiitake" mushrooms superior in quality can be produced stably in high yields.

The present invention provides a method of manufacturing artificial culturing bed blocks for "Shiitake" mushrooms comprising five steps:
(A) a process of adjusting a culture medium wherein the medium is prepared by filling a container with the medium inoculated with spawn;
(B) a first cultivation process of culturing mycelia in the container;
(C) a process of taking out the lumps of mycelia from the container when the mycelia prevail to a level where the medium surface becomes even and white by incubation;
(D) a second cultivation process of incubating the removed lumps of mycelia in a closed space with humidity kept at saturated or almost saturated condition; and
(E) a third cultivation process of incubation by watering over the above lumps of mycelia .

The method of the present invention is characterised in that when the lumps of mycelia are removed in step (C) the oxygen concentration in the container is not less than 6.0%.

The present invention is now described in further detail.

As a process of adjusting the culture medium, raw materials for bed culture medium consisting of sawdust, rice-bran or wheat-bran or the like are mixed, sterilized, inoculated with spawn, and filled into a container such as a polypropylene bag and the like.

The following methods of adjusting culture medium, for example, are available; however these examples are not to be construed to limit the scope of methods.
① mixture of raw materials for culture medium - filling a container for culture medium with the mixture - sterilization - inoculation
② sterilization of each raw material for culture medium - mixture of the raw materials - filling a container for culture medium with the mixture - inoculation
③ mixture of raw materials for culture media - sterilization - filling a container for culture medium with the mixture - inoculation
④ mixture of raw materials for culture medium - sterilization - inoculation - filling a container for culture medium with the mixture

In case of method ①, after sterilization, inoculation is conducted in a sterilized state such as clean room and the like.

In methods ② to ④, sterilization to filling a container for culture medium with the mixture (including inoculation) are conducted in succession, wherein culture medium is filled in a sterilized state.

In addition, it is desirable that *Lentinus edodes* cultivated in the present invention is a middle or low temperature type, whose fruit bodies sprout at the middle or low temperature range. In case of using high temperature type, whose fruit bodies sprout at the high range of temperature, multiplication is so vigorous as to cause easily upheaval on the whole surface.

Next, *Lentinus edodes* are cultured in a container (first cultivation process (B)). Next, the mycelia are continously cultured and then taken out at the time who the mycelia have prevailed on the surface of the culture medium and also the surface becomes even and white (process (C)). If cultivation of the mycelia is still continued as an overripening culture after the above step, uneven hyphae layer can gradually form on the even and white surface, which hardly includes culture medium.

It is desirable to remove the lumps of mycelia from the container when this area occupies not more than 25% (of the whole culture medium).

Furthermore, it is indispensable to take out the lumps of mycelia blocks from the container when the mycelia are prevailed on the whole culture medium and also oxygen concentration is not less than 6.0%, which will promote the growth and fruitfulness of *Lentinus edodes* in later processes.

Oxygen concentration in the container is 20%, which is the same as that of the atmosphere, right after inoculation of sterilized medium in the container. Gases are exchanged between inside and outside of the container through a filter for the removal of weed fungi due to the respiration heat of *Lentinus edodes* in the container. In spite of small volume, gases are continuously exchanged. Therefore, as the mycelia grow in the container, partial pressure of oxygen in the container is lowered. When the mycelia occupy around 50% on the whole culture medium in the container, the partial pressure is at a minimum. At that time, oxygen concentration in the container is around 4%.

When the mycelia prevail over almost all the culture medium in the container, the speed of the growth becomes slow, the respiration volume decreases, and oxygen concentration turns to rise due to gas exchange through the filter part. When the culture has overspread with mycelia perfectly (that is, the medium becomes even and white), the oxygen concentration turns to show a value of not less than 6.0%. If cultivation is continued in this state, oxygen concentration rises furthermore. Since mycelia grow continuously, the mycelia prevailed on the culture medium start to upheave and then these upheaved parts adhere perfectly to the inside wall of the container, the gas exchanged through the filter cannot reach the lower part of the container, which is cut off, and the oxygen concentration increasingly decreases.

When the upheaval occupies more than 25%, oxygen concentration becomes less than 6.0%. If the cultivation is still continued, the oxygen concentration decreases to 1 to 2%. If the cultivation is continued under extremely low concentration of oxygen, the respiration of *Lentinus edodes* is restrained and the activity decreases. Therefore, the time to the harvest time is prolonged and, as a result, yield and quality deteriorate. Accordingly, it is better that the lumps of mycelia are removed as soon as possible under the condition of 6.0% oxygen concentration.

It is desirable to set the temperature in the first cultivation process at 15° to 28 °C, more preferably 20° to 25 °C.

Next, the lumps of mycelia removed from the container wherein the surface is even and white, are placed into, for example, a closed space (a completely closed space or nearly closed space) 2 to 10 times as large as the total volume of the lumps of mycelia for cultivation (the second cultivation process (D)).

In this process, the lumps of mycelia removed from the container are placed side by side with a specified spacing on a net rack and then the rack with the lumps of mycelia placed side by side is covered with a vinyl sheet.

Activity of the lumps of mycelia increase and surplus water in the lumps is secreted as metabolic water because the lumps get a sufficient amount of oxygen and moisture due to being taken out of the container and placed into a closed space, so that the humidity (relative humidity; the same hereinafter) is kept at not less than 90%.

Therefore, in the present invention, "saturated" means that the humidity is 100% and "almost saturated" means that the humidity is not less than 90%.

By continuing the cultivation under such circumstances, a close and filmy hyphae layer comprising one layer can be formed on the surface of white and even lumps of mycelia. This hyphae layer is different from the uneven hyphae layer formed in a container as overripening culture. Since oxygen concentration is near to that of the atmosphere and also the condition prevents dryness, the mycelia become more active physiologically than those in a container.

In addition, this is obvious from the point that lignin decomposition progresses rapidly by nearly 1% in several days in second cultivation process.

Still furthermore, as time goes by, the filmy hyphae layer becomes close and also becomes hard to some extent. Therefore, external lacerations caused by removing the lumps of mycelia from the container are healed and concomitantly become resistive to weed fungi.

Furthermore, it is desirable to set the volume of the closed space 2 to 10 times as large as the total volume of the lumps of mycelia in the second cultivation process. If the volume of the closed space is less than two times the total volume of the lumps of mycelia, the lumps placed side by side in the closed space tend to stick to each other. Once they stick to each other, the surface of the lumps is easily injured when they are pulled apart.

If the volume of the closed space is over 10 times the total volume of the lumps of mycelia, on the other hand, space is wasted due to leaving too much space, and the absolute quantity of water secreted from the lumps of mycelia runs short, which reduces humidity in the closed space to less the 90%, the surface of the lumps of mycelia is dried and the activity of mycelia tends to become weak.

For culturing the lumps of mycelia in this kind of closed space, it is desirable to set a temperature between 15°C and 28 °C. When the temperature falls to lower than 15°C, it takes longer time for mycelia layer forming, while,when it rises higher than 28°C, the activity of mycelia tends to become weak.

It is advisable to control the moisture by using a humidifier and the like in accordance with the size of the space, the number of lumps of mycelia and the like.

For example, if the moisture content of the lumps of mycelia placed in a closed space is lower than 50% by weight, the humidity in the closed space can hardly be increased to a specified degree. It is, therefore, advisable to put a container filled with water in the closed space to raise humidity in the space by the moisture evaporated from the container.

The appropriate moisture content of bed culture medium for *Lentinus edodes* cultivation is about 60% and by keeping the lumps of mycelia in a closed space as described above, *Len tinus edodes* themselves are kept in equibrium at the appropriate moisture degree (50 to 70%) to demonstrate an appropriate activity.

When the mycelia are cultured in a space as described above, it is preferable to set the culturing time at 3 to 10 days. Culturing time of less than 3 days does not allow aerial hyphae layer to form and does not allow even distribution of moisture. Culturing time exceeding 10 days, on the other hand, is not necessary because the maximum benefits are achieved within 3 to 10 days. When the temperature in the closed space is within ± 3 °C of 25°C, for instance, culturing time of 3 to 5 days is good enough. At a temperature not more than 20°C, however, 5 to 10 days are required.

Instead of forming thee closed space by covering the rack with the lumps of mycelia placed side by side with a vinyl sheet as described above, it is also possible to form the space by a closed house with a ventilator at the top provided with a humidifier, air conditioner, humidity sensor, temperature sensor, exhaust fan and a floor drain channel. This closed house is advantageous in that the inside can be controlled to the optimum temperature and humidity conditions for growth of mycelia at all times.

The lumps of mycelia cultured in the closed space as described above are then taken out of the closed space to be watered in an open space (Third cultivation process (E)).

As a method of watering, either of an atomizer type, a sprinkler type, a fountain type, a water flow type or the like is acceptable only if water drops flow on the surface of lumps of mycelia thereby.

For example, the closed space is opened by removing the vinyl sheet or by opening a ventilator, and water is sprinkled evenly onto the lumps of mycelia with a water sprinkling device such as a sprinkler type or with a spray nozzle from the above rack.

The temperature of water used is preferably set at 15° to 28 °C, more preferably 20° to 25 °C by controlling the ambient temperature or by setting temperature of the water used for sprinkling within said temperature range.

Antimicrobial substances or growth accelerator of mycelia may be dissolved into the water used for sprinkling. And also, ozone water, ultraviolet treatment water, magnetism treatment water, supersonic wave treatment water, a variety of active ion water or the like can be utilized.

By this cultivation process, browning on the surface of lumps of mycelia develops and as a result the whole surface turns brown. The surface is lignified thereby so that an artificial culturing bed block with physical resistance can be obtained.

During this process, the activity of mycelia in the lumps is accelerated by being watered so that decomposition of lignin in the culture medium proceeds furthermore. It is desirable that the ratio of cellulose/lignin is set at not less than 3.3 at the end of third cultivation process. It is more desirable that it is set between 3.3 and 5.5.

In addition, the above cellulose and lignin are measured by an analysis in accordance with JIS.

When the ratio of cellulose/lignin is set at not less than 3.3, lignin content (solid weight) is preferably set at not more than 15%, more preferably 9 to 13%, besides the ratio of cellulose/lignin. That is, the decrease of lignin content (solid weight) compared with the initial content in the lumps of mycelia means that lignin is decomposed and the rate of taking the culture medium thereto (digestion) is increased. If lignin content is set at not more than 15% with setting of cellulose/lignin ratio, the complete growth of the lumps is confirmed firmly.

Furthermore, the weed fungi which fly onto the surface of the lumps of mycelia are washed off by watering so that the effect to give dissolved component of oxygen is accelerated to grow the lumps resulting in an artificial culturing bed block (the third cultivation process (E)).

In this case, any external lacerations caused by removing the lumps of mycelia from the first container are healed by cultivation in the closed space (second cultivation process (D)), and moisture distribution in the lumps of mycelia is also optimized, so it is hard for sprinkled water to penetrate into the lumps of mycelia. And also, since a close hyphae layer is formed on the surface thereof, the lumps of mycelia are not damaged by the drops of sprinkling water.

It is desirable to sprinkle water for not less than 7 days, more preferably 20 to 90 days. By sprinkling for 7 days or more, the surface of the lumps of mycelia normally turns brown and lignified (hardened), activity of the mycelia increasingly rises and resistance to weed fungi increases. By this cultivation process, the lumps of mycelia are turned into artificial bed blocks for "Shiitake" mushroom cultivation. When the period of water sprinkling is less than 7 days, it may possibly cause re-contamination by weed fungi at later processes when fruit bodies of mushroom appear.

The water sprinkling may be continued for 24 hours or may be intermittent every 8 hours. It is also possible to divide the sprinkling process into two steps, i.e., in the first half to spray a comparatively large quantity of water so as to keep the lumps of mycelia wet at all times, and in the later half to reduce the quantity of water to be not more than one and a half times the initial weight of the culture medium or to sprinkle intermittently so that equilibrium moisture is kept in the lumps of mycelia.

The artificial bed blocks for "Shiitake" mushrooms thus obtained can be used for appearing of mushroom fruit body in the same manner as for the bed logs made from trees by sprinkling and soaking in water in accordance with known methods of cooling stimulation and the like.

According to the present invention, mass production of artificial bed blocks for "Shiitake" mushroom cultivation can be industrialized, wherein "Shiitake" mushroom in high quality can be obtained stably at high yield ratio.

The present invention is described further referring now to some embodiments.

### EXAMPLES 1 TO 3, COMPARATIVE EXAMPLE 1 TO 4

### [medium adjusting process]

Sawdust, rice-bran and wheat-bran were mixed in the ratio of 8:1:1 (of volume) and then water was added thereto to adjust the water content to 60 to 65%. Next, a container made of polypropylene was filled with 1Kg of the mixture and covered with a cap having a filter. The culture medium was subjected to high pressure steam sterilization at 121°C for 90 minutes, cooled down and then inoculated with spawn in a clean room. KB-2001 is adopted as *Lentinus edodes* for strain.

In addition, the ratio of cellulose/lignin is 2.2 at this point.

### [first cultivation process]

The room for culturing was set at a temperature of 18° to 25°C for the lumps of mycelia to prevail over the whole surface of the medium.

### [process of taking out the lumps of mycelia from the container]

And then, the lumps of mycelia were removed from the container under the conditions mentioned in table 1.

In addition, oxygen concentration in the container was measured by oxygen concentration measurement by putting an inlet needle at the bottom of the container.

### [second cultivation process]

The lumps of mycelia were cultured in almost saturated humidity (not less than 90%) at a temperature of 18 ° to 25 °C for 5 days to form a new hyphae layer on the surface thereon.

### [third cultivation process]

The lumps of mycelia were sprinkled continuously (so that water can flow down from the surface of the lumps) at a temperature of 18 ° to 25 °C for the first 10 days (24 hours per day) and then sprinkled at a specific time (so that the surface of the lumps fails to dry) (8 hours per day). The condition on the surface, cellulose/lignin ratio and lignin content of the artificial bed block adjusted in the above method were checked.

Furthermore, the lumps of mycelia were cultivated at a temperature of 8 ° to 18 °C for 6 months. And occurrence ratio of weed fungi, yield ratio of "Shiitake" mushrooms, average weight per one piece of "Shiitake" mushrooms and occurrence ratio of deformation were checked.

The yield ratio of "Shiitake" mushrooms is obtained by dividing the total weight of "Shiitake" mushrooms by the initial weight of the culture medium.

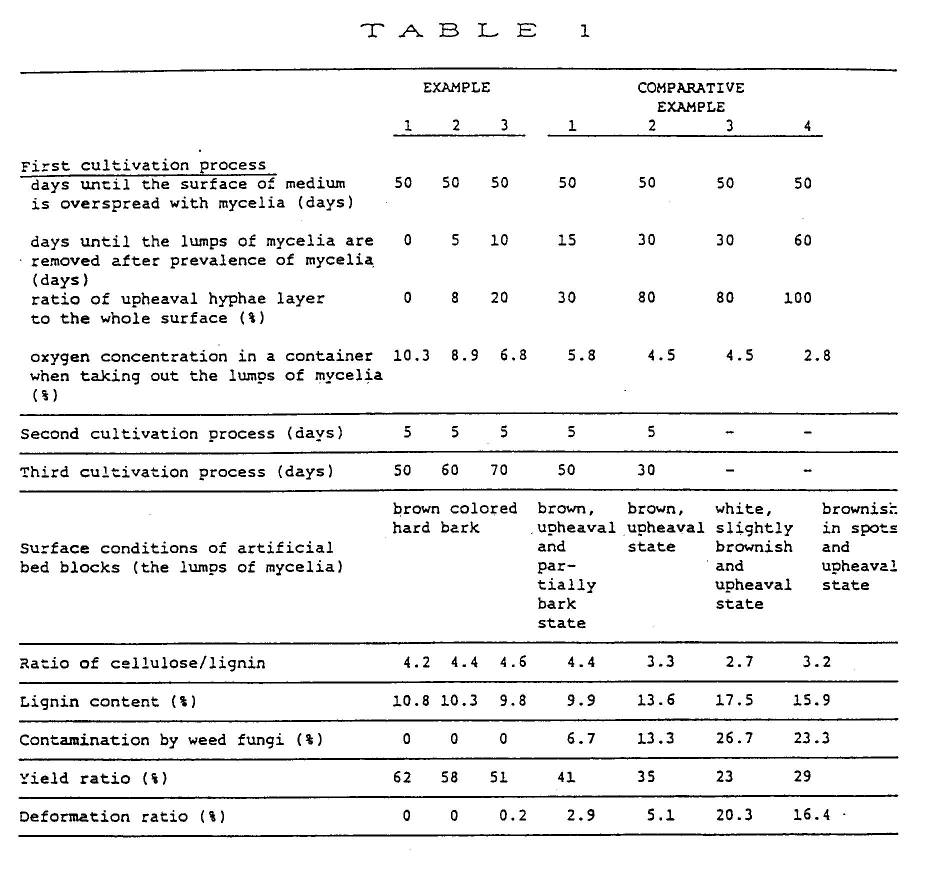

As clear from table 1, it is found that when lumps of mycelia are removed soon after the culture medium is overspread with the grown mycelia without overculturing in a bag in first cultivation process, and then cultured through second and third cultivation processes to prepare an artificial bed block, lignification in the artificial bed block is promoted and as a result yield becomes over 50%.

On the other hand, when lumps of mycelia are overripened in a first cultivation process, and then cultured continuously through second and third processes (Comparative example 1 and 2) wherein the crater-typed hyphae layer occupies not less than 30%, the resistance to weed fungi deteriorates and occurrence ratio of deformation rises, causing the undesirable result of a decrease in yield.

In addition, when lumps of mycelia are overcultured in a bag without second and third processes and are used for cultivation (Comparative examples 3 and 4), yield is low, easily damaged by weed fungi and occurrence ratio of deformation rises.

## Claims

1. A method of manufacturing artificial culturing bed blocks for "Shiitake" mushrooms comprising the following steps:
(A) a process of adjusting a culture medium wherein the medium is prepared by filling a container with the medium inoculated with spawn;
(B) a first cultivation process of culturing mycelia in the container;
(C) a process of taking out the lumps of mycelia from the container when the mycelia prevail to a level where the medium surface becomes even and white by incubation;
(D) a second cultivation process of incubating the removed lumps of mycelia in a closed space with humidity kept at saturated or almost saturated condition; and
(E) a third cultivation process of incubation by watering over the above lumps of mycelia;
characterised in that when the lumps of mycelia are removed in step (C) the oxygen concentration in the container is not less than 6.0%.

## Patentansprüche

1. Verfahren zum Herstellen von künstlichen Zuchtbettblöcken für Shiitake-Pilze, umfassend die folgenden Schritte:
(A) ein Verfahren zum Herrichten eines Kulturmediums, bei dem das Medium durch Füllen eines Behälters mit dem mit Myzel geimpfte Medium präpariert wird,
(B) einem ersten Kultivierungsprozeß der Zucht von Myzelien in dem Behälter,
(C) einen Prozeß des Herausnehmens der Myzelienklumpen aus dem Behälter wenn die Myzelien in einem Maße überwiegen, bei dem die Oberfläche des Mediums durch Inkubation eben und weiß wird,
(D) einem zweiten Kultivierungsschritt der Inkubation der herausgenommenen Myzelienklumpen in einem geschlossenen Raum mit einer Feuchtigkeit im gesättigten oder fast gesättigten Zustand und
(E) einem dritten Kultivierungsprozeß der Inkubation durch Bewässern der vorgenannten Myzelienklumpen,
dadurch gekennzeichnet, daß bei Herausnahme der Myzelienklumpen im Schritt (C) die Sauerstoffkonzentration im Behälter nicht weniger als 6% ist.

## Revendications

1. Procédé pour la fabrication de blocs artificiels pour lits de culture de champignons "Shiitake" comprenant les étapes suivantes :
(A) un traitement d'ajustement d'un milieu de culture dans lequel le milieu est préparé par remplissage d'un récipient avec le milieu inoculé par le mycélium blanc de champignon;
(B) une première culture pour la culture de mycéliums dans le récipient;
[C] Le prélèvement des morceaux de mycéliums du récipient lorsque les mycéliums prédominent au point que la surface du milieu devient régulière et blanche par incubation;
(D) une deuxième culture pour l'incubation des morceaux de mycéliums prélevés, dans un espace clos avec une humidité maintenue à un état saturé ou presque saturé; et
(E) une troisième culture pour l'incubation par arrosage sur les morceaux dc mycéliums ci-dessus;
caractérisé en ce que lorsque les morceaux de mycéliums sont prélevés dans l'étape (C), la concentration en oxygène dans le récipient n'est pas inférieure à 6,0%.
